# EUROPEAN PATENT SPECIFICATION

(11) **EP 0 370 680 B1**
(45) Date of publication and mention of the grant of the patent: **08.05.1996**
(21) Application number: 89311780.4
(22) Date of filing: 14.11.1989
(51) Int. Cl.: H04B 10/04

(54) **Infrared transmitter apparatus**
Infrarote Senderanordnung
Appareil émetteur dans l'infrarouge

(30) Priority: 14.11.1988 US 271570
(43) Date of publication of application: 30.05.1990
(73) Proprietor: PHOTONICS CORPORATION, Campbell California 95008 (US)
(72) Inventor: Crawshaw, Charles L., Monte Sereno California 95030 (US); Sacherman, James E., Palo Alto California 94301 (US); Piccone, John, San Jose California 95123 (US); Toor John W., Palo Alto California 94301 (US); Allen, Richard C., Los Gatos California 95008 (US)
(74) Representative: Bowman, Paul Alan

(56) References cited:
- PATENT ABSTRACTS OF JAPAN, vol. 10, no. 170 (E-412)[2226], 17th June 1986;& JP-A-61 23 427 (MATSUSHITA) 31-01-1986
- PROCEEDINGS OF THE IEEE, vol. 67, no. 11, November 1979, pages 1474-1486, IEEE, NY, US; F.R. GFELLER et al.: "Wireless in-house data communication via diffuse infrared radiation"
- PATENT ABSTRACTS OF JAPAN, vol. 10, no. 289 (E-442)[2345], 2nd October 1986;& JP-A-61 107 830 (MORITETSUKUSU) 26-05-1986
- PROCEEDINGS OF THE 7TH INTERNATIONAL CONFERENCE ON COMPUTER COMMUNICATION, Sydney, 30th October - 2nd November 1984, pages 333-338, Elsevier, NH, NL; Y.NAKATA et al.: "In-house wireless communication system using infrared radiation"
- PATENT ABSTRACTS OF JAPAN, vol. 11, no. 7 (E-469)[2454], 9th January 1987;& JP-A-61 182 338 (HITACHI) 15-08-1986
- PATENT ABSTRACTS OF JAPAN, vol. 9, no. 143 (E-322)[1866], 18th June 1985;& JP-A-60 25 334 (MATSUSHITA) 08-02-1985

## Description

This invention is concerned with the field of data communication. More particularly, the invention is concerned with wireless data communication, such as by using infrared as the communications medium, and the application of wireless data communication in local area networks commonly referred to as LANs. The invention relates to an illumination transmitter apparatus for projecting signal-bearing illumination onto a planar surface. The invention also relates to a LAN of the kind in which intercommunication between units of the LAN is by reflection from a common planar surface.

In the field of wireless data communication the transmission media include electromagnetic radiation transmission in the radar, radio and microwave frequency ranges. The transmitting and receiving apparatus typically include dish or dipole type antennae.

Wireless data transmission using reflected infrared radiation is disclosed in our copending European patent application 89303856.2 published under the number EP-A-0338789 published 25th October, 1989. It is preferable that inexpensive commercially available infrared LEDs be used as the transmission source for the infrared radiation. However, the intensity of such LEDs is generally insufficient to effectively transmit intelligible radiation for useful distances. To overcome this problem multiple LEDs may be employed. Each additional LED increases the intensity of the transmitted radiation.

For connecting multiple infrared transceivers together, such as for a local area network (LAN) in an open office environment, acoustical ceiling tile makes an ideal diffuse infrared reflector. In a large open office environment, of the type using cubicle offices, the ideal illumination size on the diffuse infrared reflector is an area having maximum dimensions of about 2.4-3m (8-10 ft.). Having an illuminated location of this size will allow for the inherent variations in illumination size which results from the relative location of each transceiver.

In a large open office it is preferable that the illumination location be somewhat centralized. For a single open office having more than one LAN two or more illumination spots are necessary. Clearly each of these illumination spots cannot be in the center of the room. As infrared illumination is transmitted the radiation beam will spread out as the distance increases. Thus, those transceivers positioned directly below the illumination location will project a relatively small spot and those transceivers positioned across the room will project a larger spot.

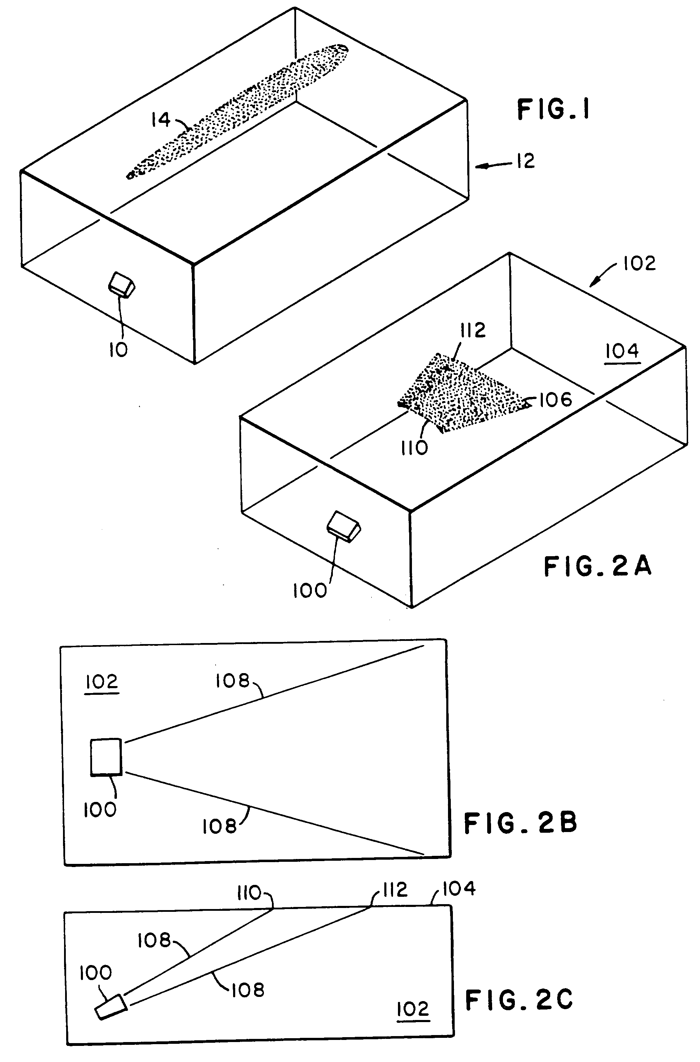

In a large room having cubicles, the angle of an incident radiation beam can become quite small. If the ceiling is 3,65m (twelve feet) off the floor and transceiver is mounted on top of a 1,52m (five feet) cubicle wall a beam projected from 12,2m (forty feet) away forms an average angle of approximately ten degrees to the ceiling. If the LEDs are tightly clustered or in a vertical orientation in the transmitter the projected pattern becomes a long thin stripe on the ceiling. Figure 1 of the accompanying drawings shows an infrared transmitter 10 in a room 12 projecting an infrared signal at the ceiling. The transmitter 10 has a plurality of infrared LEDs positioned in a line. The orientation of the line of LEDs is essentially vertical. The illumination projection 14 is shown as a long stripe on the ceiling.

What is needed is an infrared transmitter which will transmit an infrared signal at relatively small projection angels and still maintain a small compact illumination location.

We shall describe how a more advantageous illumination projection area is obtainable. The projection area utilised has the shape of an isosceles trapezoid. A transmitter apparatus embodying the invention provides an adjustable mounting which maintains an orientation of a line of LEDs by which the desired projection shape can be realised.

The use of a planar wall or ceiling area as a common reflecting surface for wireless communication is known. Such a surface may be used to reflect signals around an intervening obstruction as is disclosed in Patent Abstracts of Japan, Vol. 10, No. 170, (E-412)[2226]. The use of a planar surface, and in particular a diffuse reflection surface, as a common reflecting surface in a LAN is disclosed in EP-A-0338789 mentioned above. Neither of these documents discusses the selection of a particular shape of projection area which is advantageous in enabling two or more LANs to operate within the same space.

A LAN in which individual units within the LAN are adjustably mounted is disclosed in a paper by Nakata et al entitled "In-house wireless communication system using infrared radiation", published in the "Proceedings of the Seventh International Conference on Computer Communication", Sydney in 1984, at pages 333-338, Elsevier. This paper discloses the mounting of infrared units on a flexible arm, shown as a gooseneck or similar mounting. In the LAN disclosed in this paper the communication is via active trasponders on the ceiling toward which the individual units are directed.

According to the present invention there is provided an illumination transmitter apparatus for projecting signal-bearing illumination onto a planar surface, the apparatus comprising a transmitter portion including a plurality of illumination sources positioned to emit illumination from the transmitter portion and a support portion; characterized in that:
said transmitter portion has said plurality of illumination sources positioned in a horizontal line and is mounted on said support portion by an adjustable mounting arrangement which permits restricted degrees of freedom of angular movement of said transmitter portion with respect to said support portion so as to maintain the line of illumination sources parallel to a predetermined plane, whereby said support portion may be fixedly mounted and the orientation of said transmitter portion adjusted with respect thereto while maintaining said line of illumination sources parallel to a planar surface to be illuminated thereby.

The adjustable mounting arrangement may be constructed to permit two degrees of freedom of rotational movement of the transmitter portion with respect to the support portion, these two degrees of freedom being rotational movement in planes parallel to and perpendicular to said predetermined plane. In a preferred construction described below, the adjustable mounting arrangement comprises a circular bearing for rotation in a plane parallel to said predetermined plane. The preferred construction also comprises a tilting mechanism, such as a hinge, providing rotational movement in said perpendicular plane.

The illumination sources of the apparatus described below are operable to generate illumination in the infra-red, and more particularly they are light-emitting diodes.

In the illumination transmitter apparatus of the invention, the support means may comprise clamping means which is adapted to be clamped on a wall. In the preferred embodiment of the appratus described below, the clamping means also serves to house electronic circuitry.

The transmitter portion of the illumination transmitter apparatus may comprise an opening from which the signal-bearing illumination is projected, the illumination being projected from a mirror optically interposed between the illumination sources and the opening and the line of illumination sources being the sources as seen in the mirror from the opening.

The illumination transmitter apparatus of the invention finds particular use in a wireless local area network (LAN) of the kind in which intercommunication between units of the LAN is by reflection from a common planar surface area. To this end the support portion of the transmitter illumination apparatus is fixed to enable the transmitter portion to be adjusted to aim illumination at the above common planar surface area with the line of illumination sources being parallel to the plane of this surface area. The transmitter portion projects illumination onto the surface area to form an illumination image which substantially has the shape of an isosceles trapezoid.

The invention and its practice will now be described further with reference to the accompanying drawings, in which:

Figure 1 shows an elevation view of the illumination projection produced where the orientation of a line of LEDs is vertical.

Figure 2A shows an elevation view of the illumination projection produced according to the present invention.

Figure 2B shows a top view of the illumination projection shown in Figure 2A.

Figure 2C shows a side view of the illumination projection shown in Figures 2A and 2B.

Figure 3 shows a side view of a preferred transmitter apparatus embodying the present invention.

Figure 4 shows a front view of the preferred transmitter apparatus.

Figure 5A shows a cross section top view of the preferred transmitter apparatus.

Figure 5B shows a cross section top view of an alternate embodiment of the transmitter apparatus.

Like numbers for like elements are used in the various figures.

Figure 2A shows an elevation view of the illumination projection produced according to the preferred embodiment of the present invention. As will be described below, the LEDs in the transmitter 100 are positioned in a line and oriented horizontally, i.e. the line of the LEDs is parallel to the plane of the ceiling 104 or the room 102. The illumination projection 106 is approximately an isosceles trapezoid.

Figure 2B shows a top view of the illumination projection. The infrared radiation 108 transmitted from the transmitter 100 spreads out laterally in an amount proportional to the distance of the radiation from the transmitter 100.

Figure 2C shows a side view of the illumination projection. The infrared radiation 108 transmitted from the transmitter 100 spreads out laterally in an amount proportional to the distance of the radiation from the transmitter 100. The infrared radiation 108 strikes the ceiling 104 some distance from the transmitter 100. The boundaries of the illumination parallel to the line of the LEDs are approximately parallel to the line of the lights. One parallel boundary 110 is closer to the transmitter 100 than the other parallel boundary 112. The other two boundaries of the illumination projection 106, shown in Figure 2A, are closer together where they intersect the boundary 110 than where they intersect at the boundary 112.

In the preferred embodiment, lenses may be employed to develop an appropriate amount of spreading-out or expansion of the radiation beam. The optical lenses may also be used to collimate the beam. Appropriate lenses may be employed which expand the beam in one direction and collimate the beam in the other direction.

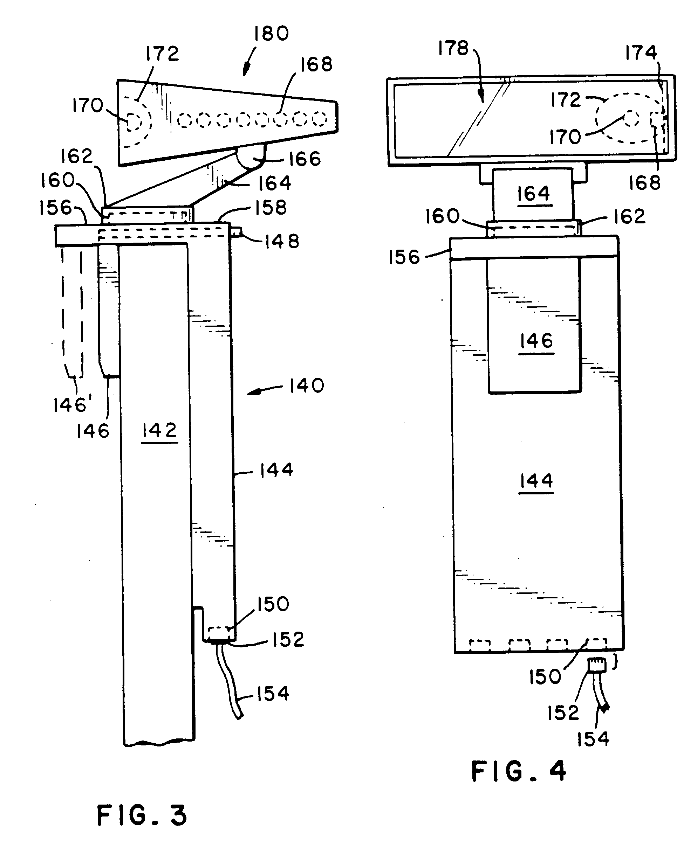

Figure 3 shows a side view of the transmitter base 140 and the transmitter housing 180. As will be described below, the transmitter base 140 and the transmitter housing 180 can rotate relative to one another. Accordingly, the orientation between the transmitter base 140 and the transmitter housing 180 shown in Figure 3 is arbitrary and can readily be changed.

In the preferred embodiment, the transmitter of Figure 3 is a wireless link for up to four residents in a LAN. The residents can be personal computers, printers, modems and the like. The operation of the infrared link for such an application is discussed in sufficient detail to enable one of ordinary skill in the art to duplicate those results in our copending European patent application EP-A-0 338 789. The transmitter base 140 contains the digital circuitry necessary to form network link. The transmitter housing 180 contains the analog circuitry to drive the infrared transmitter and the infrared receiver described in our copending application. By separating the analog and digital circuitry these circuits can be separately grounded and electrically insulated from one another. Accordingly, unwanted cross-coupling between these circuits can be avoided.

The transmitter embodying the present invention is made to sit on a cubicle wall 142 of a typical open office environment divider. The digital circuit housing 144 is a positioned to be supported against one surface of the wall 142. Opposing the digital circuit housing 144 is a clamp 146. The clamp 146 may be tightened by a tightening screw 148 to draw the clamp 146 toward the digital circuit housing 144 and thereby tightly hold the wall 142 therebetween. The clamp 146 is also shown in a loose position by the dotted lined 146′.

The digital circuit housing 144 holds a LAN interface card and other digital circuitry. The interface card contains the necessary electronic components and integrated circuits to couple the transceiver to a resident of the network. In the preferred embodiment four female connection jacks 150 are conveniently positioned along the bottom edge of the digital circuit housing 144. Each of these jacks 150 receives a male connector 152 coupled to an interface cable 154. The jacks 150 and the connectors 152 are preferably the standard four wire telephone type quick connectors. Each cable is connected to one of the network residents. The digital circuit housing 144 serves to hold the digital circuitry and to firmly hold the apparatus onto the wall 142.

A housing cross support 156 rests upon the wall 142. The cross support 156 is integral with the digital circuit housing 144. The cross support 156 and the digital circuit housing 144 are formed together at a right angle. The clamp 146 and its drive mechanism is slidably mounted within the cross support 156. The clamp is coupled to the tightening screw 148 through an internal threaded member 158. Once the tightening screw 148 is tightened the digital circuit housing 144 and the clamp 146 are necessarily parallel to one another and the opposite faces of the wall 142. By allowing the cross support 156 to rest on the top of the wall 142 the cross support becomes locked into an orientation which essentially parallel to the ceiling.

A circular flange 160 is positioned on top of the cross support 156. The flange receives a mating rotatable circular member 162. The rotatable member 162 is integrally coupled to swing arm 164. The flange 160 and rotatable member 162 are joined together as a bearing to allow the swing arm 164 to rotate. As the swing arm 164 is rotated through all of its degrees of freedom any point on the swing 164 defines a circle parallel to the ceiling.

A tilt hinge 166 is positioned in the upper end of the swing arm 164. The tilt hinge 166 is also coupled to the transmitter housing 180. The transmitter housing 180 contains the transmitter LEDs 168 and photoreceiver 170. The photoreceiver can be a photodiode or phototransistor. In the preferred embodiment, the photoreceiver 170 is at the focal point of a parabolic reflector 172 to enhance the received infrared signal. The transmitter housing 180 contains the analog circuitry necessary to drive the LEDs 168, the photoreceiver 170 and to communicate with the digital circuitry contained in the digital circuit housing 144. The analog and digital circuitry are connected by any conventional means such as ribbon cable.

Figure 4 shows a front view of the apparatus of the present invention. Each of the elements shown in Figure 3 which also appears in Figure 4 is given the same identifying reference numeral. In the preferred embodiment, eight LEDs 168 are used. The eight LEDs 168 are positioned in a line. The eight LEDs 168, photoreceiver 170 and the parabolic reflector 172 are positioned along one side of the transmitter housing 180 along with the analog circuit board 174 for ease of coupling these analog components together.

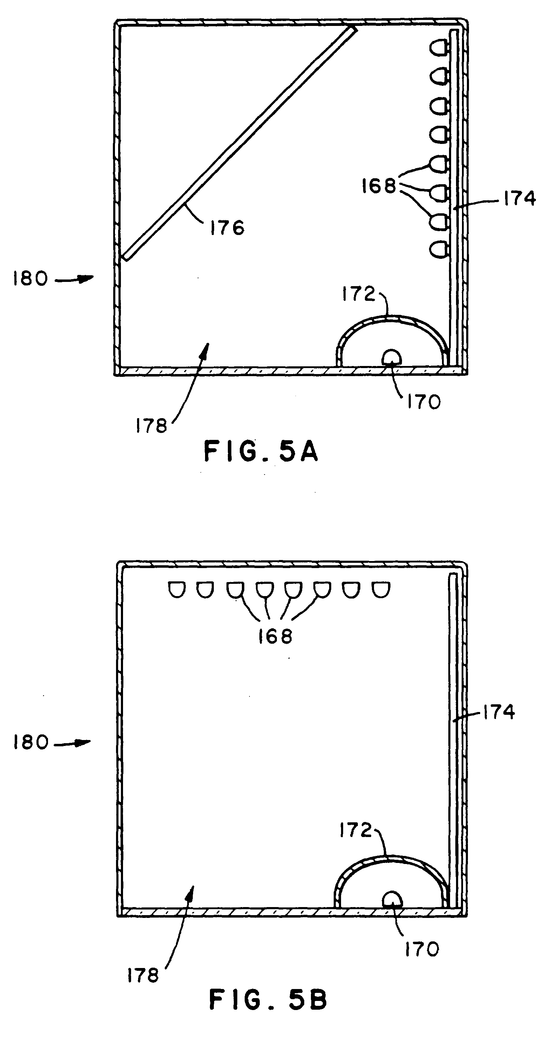

It is preferable that the illuminated projection be approximately equal in all extents. The isosceles trapezoid described in reference to Figure 2A is such an illuminated location. To achieve the isosceles trapezoid it is desireable that the line of illumination sources be parallel to the plane of the reflecting surface. Where the ceiling is used as the reflecting surface the line of the LEDs should be horizontal. The top cross section view of the transmitter housing 180 shows a mirror 176 oriented at a forty-five degree angle relative to the line of the LEDs and relative to the front opening 178 of the transmitter housing 180. Accordingly, the placement of the LEDs 168 is along a sidewall of the transmitter housing 180 to facilitate electronic connection it is equivalent to having the LEDs 168 positioned in a line across the back of the housing as shown in the alternate embodiment of Figure 5B. Thus, whenever the line of LEDs is referred to in this patent document it will mean either the actual line of LEDs as in Figure 5B or the virtual line of LEDs as in Figure 5A.

The apparatus of the present invention maintains the line of LEDs in a horizontal orientation parallel to the ceiling. The line of LEDs is a linear or quasi-linear radiation source. No matter which direction the transmitter housing 180 is rotated using the circular bearing of flange 160 and circular member 162 or what angle the transmitter housing 180 is tilted using the tilt hinge 166 the orientation of the LEDs remains the same. When the transceiver is properly mounted onto a wall 142 that orientation will always be horizontal.

An illumination transmitter is disclosed for projecting a radiated signal from a linear or quasi-linear source onto a planar reflective surface wherein the source and the surface maintain the same orientation to one another.

## Claims

1. An illumination transmitter apparatus for projecting signal-bearing illumination onto a planar surface (104), the apparatus comprising a transmitter portion (180) including a plurality of illumination sources (168) positioned to emit illumination from the transmitter portion and a support portion (140); characterized in that:
said transmitter portion (180) has said plurality of illumination sources (168) positioned in a horizontal line and is mounted on said support portion (140) by an adjustable mounting arrangement (160-166) which permits restricted degrees of freedom of angular movement of said transmitter portion (180) with respect to said support portion (140) so as to maintain the line of illumination sources (168) parallel to a predetermined plane, whereby said support portion (140) may be fixedly mounted and the orientation of said transmitter portion (180) adjusted with respect thereto while maintaining said line of illumination sources (168) parallel to a planar surface to be illuminated thereby.

2. An illumination transmitter apparatus as claimed in Claim 1 in which said adjustable mounting arrangement (160-166) permits two degrees of freedom of rotational movement of said transmitter portion (180) with respect to said support portion (140), said two degrees of freedom being rotational movement in planes parallel to and perpendicular to said predetermined plane.

3. An illumination transmitter apparatus as claimed in Claim 2 in which said adjustable mounting arrangement comprises a circular bearing (160-162) for rotation in a plane parallel to said predetermined plane.

4. An illumination apparatus as claimed in Claim 2 or 3 in which said adjustable mounting arrangement comprises a tilting mechanism (164, 166) providing rotational movement in said perpendicular plane.

5. An illumination apparatus as claimed in Claim 4 in which said tilting mechanism comprises a hinge (166).

6. An illumination apparatus as claimed in any preceding claim in which said illumination sources (168) are operable to generate illumination in the infra-red.

7. An illumination transmitter apparatus as claimed in any preceding claim in which said illumination sources (168) are light-emitting diodes.

8. An illumination transmitter apparatus as claimed in any preceding claim in which said support means (140) comprises clamping means (144, 146, 148) which is adapted to be clamped on a wall (142).

9. An illumination transmitter apparatus as claimed in Claim 8 in which said clamping means (144, 146, 148) also serves to house electronic circuitry.

10. An illumination transmitter as claimed in Claim 1 in which said transmitter portion comprises an opening from which the signal-bearing illumination is projected, the illumination being projected from a mirror optically interposed between said illumination sources and said opening and the line of illumination sources being the sources as seen in the mirror from the opening.

11. A wireless local area network (LAN) of the kind in which intercommunication between units of the LAN is by reflection from a common planar surface area, wherein one of the units is an illumination transmitter apparatus (100) as claimed in any one of Claims 1 to 9 and the support portion (140) of said transmitter illumination apparatus is fixed to enable said transmitter portion (180) to be adjusted to aim illumination at said surface area with said line of illumination sources (168) being parallel to the plane of said surface area, said transmitter portion (180) projecting illumination onto said surface area to form an illumination image (106) which substantially has the shape of an isosceles trapezoid.

## Patentansprüche

1. Leuchtsendervorrichtung zum Projizieren von signalführendem Leuchtlicht auf eine planare Fläche (104), wobei die Vorrichtung einen Senderbereich (180) mit einer Vielzahl von Leuchtlichtquellen (168), die zum Aussenden von Leuchtlicht von dem Senderbereich positioniert sind, sowie einen Halterungsbereich (140) aufweist,
**dadurch gekennzeichnet**, daß der Senderbereich (180) die Vielzahl von Leuchtlichtquellen (168) in einer horizontalen Reihe angeordnet aufweist und auf dem Halterungsbereich (140) durch eine verstellbare Befestigungsanordnung (160 - 166) angebracht ist, die eine begrenzte winkelmäßige Bewegungsfreiheit des Senderbereichs (180) in bezug auf den Halterungsbereich (140) gestattet, so daß die Reihe der Leuchtlichtquellen (168) parallel zu einer vorbestimmten Ebene bleibt, wodurch der Halterungsbereich (140) feststehend angebracht werden kann und die Ausrichtung des Senderbereichs (180) in bezug auf diesen eingestellt werden kann, während die Reihe der Leuchtlichtquellen (168) parallel zu einer von diesen zu beleuchtenden planaren Fläche gehalten bleibt.

2. Leuchtsendervorrichtung nach Anspruch 1,
wobei die verstellbare Befestigungsanordnung (160 - 166) zwei Bewegungsmöglichkeiten einer Rotationsbewegung des Senderbereichs (180) in bezug auf den Halterungsbereich (140) gestattet, wobei es sich bei den beiden Bewegungsmöglichkeiten um Rotationsbewegungen in einer zu der vorbestimmten Ebene parallelen Ebene sowie in einer dazu senkrechten Ebene handelt.

3. Leuchtsendervorrichtung nach Anspruch 2,
wobei die verstellbare Befestigungsanordnung ein kreisförmiges Lager (160 - 162) für eine Rotationsbewegung in einer zu der vorbestimmten Ebene parallelen Ebene aufweist.

4. Leuchtsendervorrichtung nach Anspruch 2 oder 3,
wobei die verstellbare Befestigungsanordnung einen Kippmechanismus (164, 166) aufweist, der eine Rotationsbewegung in der genannten senkrechten Ebene ermöglicht.

5. Leuchtsendervorrichtung nach Anspruch 4,
wobei der Kippmechanismus ein Gelenk (166) aufweist.

6. Leuchtsendervorrichtung nach einem der vorausgehenden Ansprüche,
wobei die Leuchtlichtquellen (168) zur Erzeugung von Leuchtlicht im Infrarotbereich betreibbar sind.

7. Leuchtsendervorrichtung nach einem der vorausgehenden Ansprüche,
wobei es sich bei den Leuchtlichtquellen (168) um lichtemittierende Dioden handelt.

8. Leuchtsendervorrichtung nach einem der vorausgehenden Ansprüche,
wobei die Halterungseinrichtung (140) eine Klemmeinrichtung (144, 146, 148) aufweist, die sich auf eine Wand (162) klemmen läßt.

9. Leuchtsendervorrichtung nach Anspruch 8,
wobei die Klemmeinrichtung (144, 146, 148) auch zum Aufnehmen elektronischer Schaltungseinrichtungen dient.

10. Leuchtsendervorrichtung nach Anspruch 1,
wobei der Senderbereich eine Öffnung aufweist, aus der das signalführende Leuchtlicht projiziert wird, wobei das Leuchtlicht von einem Spiegel projiziert wird, der optisch zwischen den Leuchtlichtquellen und der Öffnung angeordnet ist, und wobei es sich bei der Reihe der Leuchtlichtquellen um die Quellen handelt, wie sie von der Öffnung aus in dem Spiegel zu sehen sind.

11. Drahtloses lokales Netzwerk (LAN) des Typs, bei dem eine Interkommunikation zwischen Einheiten des LAN-Netzwerks durch Reflektion von einem gemeinsamen planaren Flächenbereich erfolgt, wobei es sich bei einer der Einheiten um eine Leuchtsendervorrichtung (100) nach einem der Ansprüche 1 bis 9 handelt und wobei der Halterungsbereich (140) der Leuchtsendervorrichtung derart befestigt ist, daß eine Einstellung des Senderbereichs (180) zum Lenken von Leuchtlicht auf den Flächenbereich ermöglicht ist, wobei die Reihe der Leuchtlichtquellen (168) parallel zu der Ebene des Flächenbereichs ist und wobei der Senderbereich (180) Leuchtlicht auf den Flächenbereich projiziert, um ein Leuchtbild (106) zu erzeugen, das im wesentlichen die Form eines gleichschenkligen Trapezes aufweist.

## Revendications

1. Appareil émetteur d'éclairage pour projeter un éclairage porteur de signaux sur une surface plane (104), l'appareil comprenant une partie émetteur (180) comportant une pluralité de sources d'éclairage (168) positionnées de manière à émettre l'éclairage à partir de la partie émetteur, et une partie support (140) ; caractérisé en ce que :
ladite pluralité de sources d'éclairage (168) de ladite partie émetteur (180) est positionnée en ligne horizontale et montée sur ladite partie support (140) par un agencement de montage réglable (160-166) qui permet des degrés limités de liberté de mouvement angulaire de ladite partie émetteur (180) par rapport à ladite partie support (140) de manière à maintenir la ligne de sources d'éclairage (168) parallèle à un plan prédéterminé, de telle manière que ladite partie support (140) puisse être montée fixement et que l'orientation de ladite partie émetteur (180) puisse être réglée par rapport à elle tout en maintenant ladite ligne de sources d'éclairage (168) parallèle à une surface plane devant être éclairée par elle.

2. Appareil émetteur d'éclairage selon la Revendication 1, dans lequel ledit agencement de montage réglable (160-166) permet deux degrés de liberté de mouvement rotatif de ladite partie émetteur (180) par rapport à ladite partie support (140), lesdits deux degrés de liberté étant un mouvement de rotation dans des plans parallèle et perpendiculaire audit plan prédéterminé.

3. Appareil émetteur d'éclairage selon la Revendication 2, dans lequel ledit agencement de montage réglable comprend un palier circulaire (160-162) pour la rotation dans un plan parallèle audit plan prédéterminé.

4. Appareil d'éclairage selon la Revendication 2 ou 3 dans lequel ledit agencement de montage réglable comprend un mécanisme d'inclinaison (164, 166) assurant le mouvement de rotation dans ledit plan perpendiculaire.

5. Appareil d'éclairage selon la Revendication 4, dans lequel ledit mécanisme d'inclinaison comprend une charnière (166).

6. Appareil d'éclairage selon l'une quelconque des revendications précédentes, dans lequel lesdites sources d'éclairage (168) peuvent fonctionner de manière à produire l'éclairage dans la zone infrarouge.

7. Appareil émetteur d'éclairage selon l'une quelconque des revendications précédentes, dans lequel lesdites sources d'éclairage (168) sont des diodes lumineuses.

8. Appareil émetteur d'éclairage selon l'une quelconque des revendications précédentes dans lequel ledit moyen de support (140) comprend des moyens de serrage (144, 146, 148) qui sont adaptés pour être serrés sur un mur (142).

9. Appareil émetteur d'éclairage selon la Revendication 8, dans lequel lesdits moyens de serrage (144, 146, 148) servent aussi à loger des circuits électroniques.

10. Emetteur d'éclairage selon la Revendication 1, dans lequel ladite partie émetteur comprend une ouverture par laquelle est projeté l'éclairage portant des signaux, l'éclairage étant projeté à partir d'un miroir interposé optiquement entre lesdites sources d'éclairage et ladite ouverture, et la ligne de sources d'éclairage étant les sources vues dans le miroir depuis l'ouverture.

11. Réseau local sans fil d'un type dans lequel l'interconnexion entre unités du réseau local a lieu par réflexion à partir d'une surface plane commune, dans lequel l'une des unités est un appareil émetteur d'éclairage (100) selon l'une quelconque des Revendications 1 à 9 et la partie support (140) dudit appareil émetteur d'éclairage est fixée pour permettre à ladite partie émetteur (180) d'être réglée pour diriger l'éclairage sur ladite surface, ladite ligne de sources d'éclairage (168) étant parallèle au plan de ladite surface, ladite partie émetteur (180) projetant l'éclairage sur ladite surface pour former une image d'éclairage (106) qui a substantiellement la forme d'un trapèze isocèle.
